# EUROPEAN PATENT APPLICATION

(11) **EP 1 455 253 A2**
(43) Date of publication of application: **08.09.2004**
(21) Application number: 04250473.8
(22) Date of filing: 28.01.2004
(51) Int. Cl.: G05D 1/00

(54) **Absolute positioning system**

(30) Priority: 29.01.2003 GB 0302087
(71) Applicant: Centurfax Limited, Berkhamsted, Herts HP4 1HT (GB)
(72) Inventor: Taylor, Mark c/o Centurfax Limited, London EN4 9SA (GB); Laurance, Gary c/o Centurfax Limited, London EN4 9SA (GB)
(74) Representative: Carstairs, J. C.

(57) **Abstract**

A system for positioning a video camera 10 within a studio area, comprises a matrix of optically detectable marker elements 16 provided on the studio floor or on a mat on the studio floor, each marker element carrying information defining uniquely the position of the marker element on the floor. The camera is mounted on a wheeled dolly 12 for movement over the studio floor. The dolly carries sensor cameras s1,s2 for detecting and reading the marker elements 16. Each marker element comprises a central marking 17 defining a central reference point and further comprises a surrounding ring or track of alternating contrasting markings 18-26 incorporating, in encoded form, information as to the position or co-ordinates of that reference point in the floor area. The marker elements, together with the sensor cameras s1,s2 and associated processing circuitry allow a marker element 16 to be located and "read" in any orientation of the camera or dolly about a vertical axis.

## Description

THIS INVENTION relates to a system for use in positioning devices such as film or video cameras within a studio set or robots within a working area.

The preferred embodiment of the invention has been developed by the applicant for use in film and video production, for example of the kind in which two or more elements of film or video footage are originally recorded independently and are subsequently combined by, for example, computer image manipulation techniques or in which, for example, computer generated graphics are combined with images of real objects, actors, etc. However, the invention may also be of utility in other applications for example in robot manufacturing facilities.

According to one aspect of the invention there is provided a system for use in positioning devices in accordance with Claim 1.

An embodiment of the invention is described below by way of example by reference to the accompanying drawings in which:
Figure 1 illustrates schematically an area within a film or television studio in which a system embodying the invention is in operation;
Figure 2 illustrates a portion of the floor surface of the studio area in Figure 1 with a plurality of marker elements thereon;
Figure 3 illustrates to a larger scale a single marker element in the system; and
Figure 4 is a schematic diagram illustrating operation of the system.

The positioning system illustrated in the drawings is intended to be used in the TV, film and video production, particularly in techniques using so-called virtual studios. In such techniques, a computer generated environment is added to a real "filmed" action. As a film or video camera moves relative to the filmed action then the perspective of the computer generated environment to be combined with the real "filmed" action has to be changed accordingly. Information as to the position of the recording camera relative to the real action is important so as to allow the computer providing the computer generated environment to keep the perspective of the computer generated virtual background correct. In such virtual studio techniques, the actors and other "real" elements in the filmed scene are commonly filmed against a blue background, the blue areas in the recorded film being replaced, in the final product, by the desired computer graphics, for example. Such a technique is generally referred to as "blue screen" or "chroma keying".

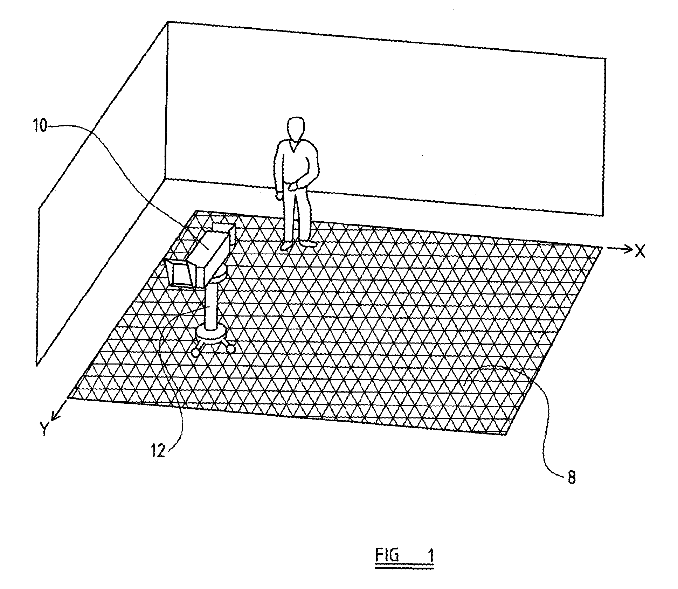

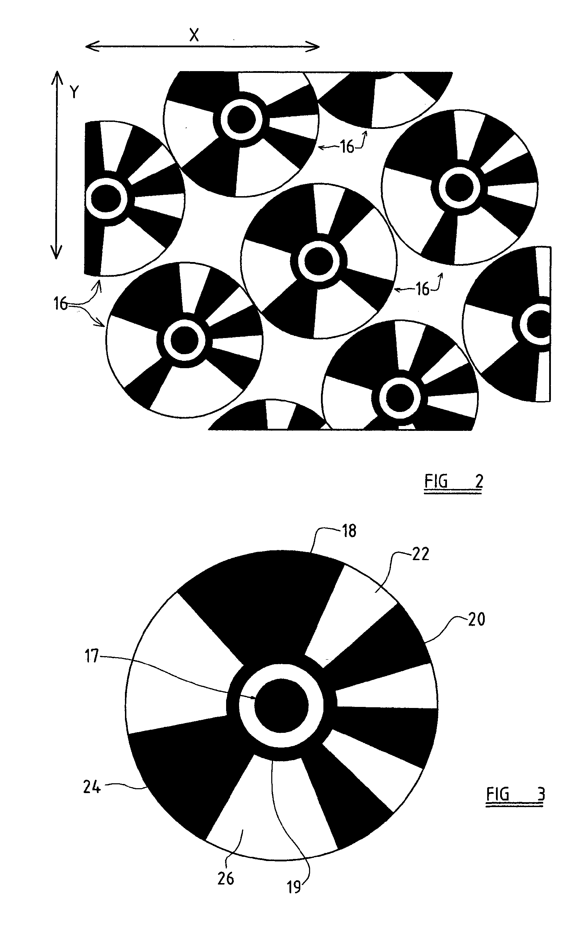

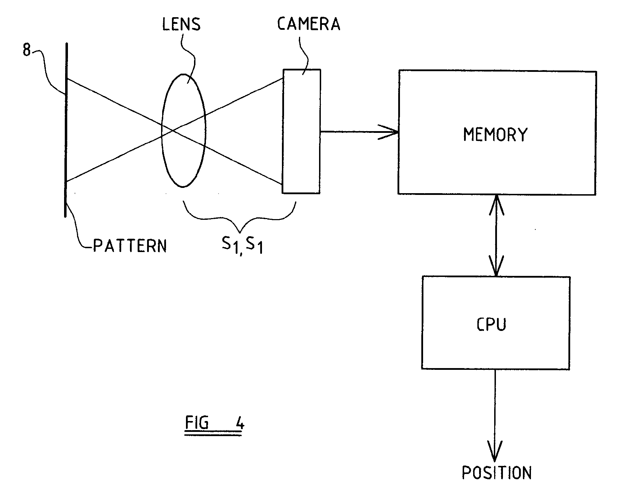

Referring to Figure 1, in the system to be described with reference to the drawings, the floor of a studio, or a mat 8 laid on the floor of the studio, is provided with a two-dimensional matrix of marker elements, each of which contains information as to the position of that marker element relative to mutually perpendicular X and Y axes along the edges of said floor or mat. The or each film camera 10 in the system is supported on a wheeled trolley or dolly 12 which rests on and can be traversed across the studio floor bearing the marker elements. Each such dolly incorporates at least one optical sensor or position sensing camera s1, s2 directed towards the floor and thus towards said array of marker elements. Figure 2 shows a fragment of this array and Figure 3 shows a single marker element of this array. The or each optical sensor s1,s2 and processing means associated therewith is capable of detecting said marker elements optically and of "reading" the marker elements to determine the position, (eg., X and Y co-ordinates), of the marker elements detected, in the reference frame defined by said X and Y axes.
The or each position sensing camera s1, s2, is preferably a video camera with a telecentric lens system focusing an image of the floor area viewed onto an image sensor or image sensing array, (which may be, but need not be, a c.c.d. chip, for example), which is scanned repeatedly by associated electronics, known *per se*, so that, for example, successive "frames" of the floor area viewed are captured at 1/20 second intervals. The dolly 12 carrying the film camera preferably also carries a lighting arrangement (not shown), associated with each position sensing camera s1, s2, to illuminate the area of the matrix viewed by the position sensing camera.

The term "filmed" is used herein to denote any recordal of a moving scene and includes processes using conventional photographic (silver halide) film stock, and video recording using magnetic tape, computer memory, hard disk or the like as the recording medium. Likewise, the term "film camera" is used herein to refer to any imaging device capable of producing from a moving scene a record of such scene or a signal which can be recorded to provide such a record. Thus, the term "film camera" is used herein to include conventional film cameras and also TV and video cameras and, in the latter case, regardless of whether the electrical signals produced by the camera are recorded by a device carried with the camera or are transmitted to a location remote from the camera.

Referring to Figures 2 and 3, each marker element 16 takes the form of a marking on the studio floor surface (or on the mat laid on that surface), which marking is visible to and optically scannable by the imaging sensor employed, for example in visible, or infra red, or ultra violet light.. Each marker element 16 is designed so that the code within it can be quickly interpreted. The main features of each marker element are as follows:

Each marker element 16 is preferably circular, so that the method used for interpretation of the marker elements works at all orientations. In the arrangement illustrated each marker element comprises a central circular dark spot 17 surrounded by a light ring surrounded in turn by a dark ring 19 which itself is surrounded by an annular area comprising alternating dark and light sectors 18,20,22,24,26,which embody the position code for that marker element. The central spot and surrounding rings serve to identify the relative position of the coded part of the marker element around it and also to define the camera position relative to the centre of the marker element with good accuracy. As discussed below, one of the sectors referred to, referenced 18 in Figure 3, provides an index which defines the start and finish of the position code. The central spot or bullseye 17 and the surrounding rings mark the centre of the marking element being read.

In the preferred embodiment, each marker element is preferably made up of two tones, although this is not essential. For convenience, in the description which follows the two tones are in places referred to as black and white. However, typically, the two tones will be light blue and dark blue.

The code system adopted is preferably such that for every marker element, the ratio of the area of one tone to the area of the other tone is the same for each marker element so that, from a distance, at which the individual marker elements cannot be distinguished, the observed tone the floor area is constant. (As long as the amount of dark and light in each marker element is the same then each marker element will appear as a constant colour when out of focus or below the resolution of a viewing film or video camera).

The spatial frequency of the codes is such that they cannot be clearly seen from a distance. (This allows the flooring to blend in with the rest of the "blue screen" of the virtual set so it can become part of the virtual set).

The position sensing camera or sensor preferably incorporates a telecentric lens arrangement. With such an arrangement, distance of the sensor from the floor can be varied, within limits, without significantly altering the size of the image of each marker element as it appears to the sensor camera. This has the advantage that mounting and focusing of the sensor camera does not have to be too exact.

The central spot or bulls eye of each marker element is a reference point for the whole pattern and depending on the position of the bulls eye within the sensor camera's view this produces an extra order of positional accuracy.

Referring to Figure 3, a key feature of each marker element shown is the central spot or bulls eye 17. This marks the centre of the marker element circle and is of the same size for every marker element. This allows automatic sizing of the whole feature so that variations in apparent size, (occurring to some extent despite the use of a telecentric lens), with distance of the sensing camera from the marker. As noted above, the code is embodied in a series of black and white filled portions or sectors 18-26 around the central spot or bulls eye 17. The code used may be such that each sector has an arcuate length equal to, or equal to an integral multiple of, a predetermined unit angular extent, and each sector, apart from the index sector, has a maximum extent which is less than that of the index sector. For example, assuming that the coded position of each marker is represented by an n-digit binary number, each such possible binary number is represented by an respective m-digit number where m is significantly greater than n, with those m-bit binary numbers having anywhere a succession of "1"s or a succession of "0"s equal to or greater in number than said integral multiple assigned to the index sector being eliminated or "forbidden" in the transformation from n-digit to m-digit binary number. Likewise, in order to ensure a predetermined average colour or tone for each marker element, those m-bit binary numbers which would result in a departure from the predetermined average colour or tone are also eliminated or "forbidden" in that transformation. The index sector 18, in the form of a solid black or dark filled sector of larger arc than is allowed within all the possible codes, marks the start and finish of the code around the marker element. Each marker element has a unique code made up of filled black and white sectors 20 - 26 to indicate the position of the marker element within the total matrix.

In Figure 3 reference 18 denotes the index sector and references 20-26 denote respective code sectors.

The position sensing camera or sensor s1, s2 may comprise a digital image sensor and lens arrangement and some specialist hardware for processing the view. The field of view of the position sensing camera or sensor preferably incorporates three or four such marker elements. The position sensing camera can thus derive a coarse position from the actual code embodied in a marker element and a fine position from where the centre of that marker element is within the sensor camera's field of view. When two or more of these marker elements can be observed within the camera's field of view and their position within that field of view determined, then the camera skew, or angular position about a vertical axis, relative to the matrix, and thus also relative to the X and Y axes of the floor area, can also be determined. The field of view of the sensor camera frame might appear as shown in Figure 2.
For more accurate assessment of the angular position or skew of the video or film camera or dolly relative to the matrix of marker elements, and to provide some redundancy of information for error checking, etc., the film or video camera may have two sensors or position sensing cameras of the kind described, as shown at s1 and s2 in Figure 1, arranged to view respective spaced apart regions of the floor area, such that, for example, there is a predetermined spacing between the centres of the field of view of the two position sensing cameras.

To process the image within the sensor camera field of view or frame, it is necessary first to identify the position of the centre bulls eye of one or each marker element within the field of view. This may be done by taking each pixel of the image of the frame in turn and examining the pixels around it in an ever increasing circle and comparing each pixel with what would be expected if the first-mentioned pixel at the centre of such a bulls eye, this examination being made to the expected diameter of such a bulls eye and within some level of tolerance of errors. Once a valid bulls eye centre has been identified by this technique, the centre position can be stored. Likewise the centre position for each marker element in the field of view of the sensor camera can be determined by this technique.

To assist processing and to allow further processing, the pixel image from the sensor camera can be stored in SRAM and the processing done using a fast microprocessor. (The amount of processing is considerable).

Once the centre position of the marker element has been determined as described above, the processor can read the 1s and 0s contained within the code of the circle by reading the appropriate pixels in the memory. The order is unimportant at this stage so, for example, referring to Figure 3 the marker element shown therein would give a raw code of, for example, 101010100110011, where a single "1" between two "0s" or a single "0" between two "1s" is represented by a black 20 or a white 22 sector respectively of unit angular width and two adjacent "1s" or two adjacent "0s" are represented by a black 24 or a white 26 sector respectively of twice the unit angular width.
Assume that in this example, only the index sector 18 may have a width of 3 unit widths. Then, in this example, there is only one position where three "1s" are together and this must indicate the index sector. Accordingly the code must be 111010101001100. Ignoring these first 3 "1's" as these represent the index sector and are the same for each marker element, the "raw" position code becomes 010101001100. Transformation yields a number representing the co-ordinates of the centre of the marking element and this is the coarse measurement or approximation of the camera position. The precise position of the camera of course depends upon the co-ordinates of the bullseye centre of a marker element 16 within the field of view of the sensor camera, plus or minus offsets which depend upon the X or Y displacements of that bullseye centre from, for example, the centre of the field of view of the sensor camera (see Figure 2).

It would be feasible so to arrange matters that the index sector was shorter,(rather than longer), in the circumferential direction than any other sector allowed in the coding system, but this would impose a greater constraint upon the number of digits which could be represented in the coding.

Figure 4 illustrates schematically the arrangement of a position sensing camera in the system. For convenience, the marker element pattern viewed is shown in Figure 4 as being vertical although, of course, where the marker elements are provided on the studio floor, as described above, the area viewed will be horizontal. Figure 4 shows the action of the lens system forming an image on, for example, a ccd array in the camera and illustrates the transfer of the "raw" ccd image to memory and the processing of the image stored in memory by processing unit (CPU) to derive the position co-ordinates. The position co-ordinates may be recorded in such a way as to be linked to the scene being filmed so that, for example, the record of each "frame" of the film footage also includes a record of the position and orientation, (skew), of the film camera during capture of that frame.
Whilst in the system described each marker element carries in coded form the full absolute co-ordinates of its position, in a variant system, some marker elements may carry information as to which of a real or imaginary grid of squares (or rectangles ) over the studio floor the camera dolly is in, whilst other marker elements may carry information as to the positions within that square or rectangle occupied by such other marker elements.
Whilst in the above, the array of marker elements has been described as located on a floor surface, the array could, alternatively, be located on a ceiling surface, or any other surface disposed parallel to the permissible directions of movement of the film camera, with the sensor cameras, of course being appropriately mounted to view the array wherever positioned.
Whereas in the preferred system described above, each marker element is circular, it will be understood that the marker elements might be of other shapes, such as square or hexagonal, whilst still having the basic structure of a central marking defining a central reference point and a surrounding ring or track of alternating contrasting markings incorporating the position code.

In the present specification "comprises" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A system for use in positioning devices within a working area, comprising a matrix of optically detectable marker elements provided on a base or floor surface in such area, each said marker element carrying information defining uniquely the position of the marker element on said base or floor surface, the system including at least one device capable of translation or movement over said base or floor surface and having optical detector means for detecting and reading said marker elements, each marker element comprising a central marking defining a central reference point and further comprising a surrounding ring or track of alternating contrasting markings incorporating, in encoded form, information as to the position or co-ordinates of said reference point in the area of said floor or base, said detector means and/or said marker elements being such as to allow a said marker element to be located and "read" in any orientation of the respective device about a vertical axis thereof perpendicular to said floor or base surface.

2. A system according to Claim 1 wherein said ring or track of contrasting markings incorporates the positional information in digitally encoded form, and the property of each said marking in said ring or track of significance in said code is the circumferential extent of the marking around said ring or track.

3. A system according to Claim 1 or Claim 2 wherein the marking elements are visible elements and the code system employed to determine the code incorporated in any said marker element is such that the average tone or colour of each said marker element is the same.

4. A system according to any preceding claim wherein the starting point or index for the code incorporated in any said marker element is defined by a marking of predetermined width in the circumferential direction of said ring or track and the code system employed to determine the code incorporated in any said marker element is such that the remaining markings in said ring or track have each a lesser width in the circumferential direction of said ring or track than said index marking.

5. A system according to any of Claims 1 to 4 wherein each marker element comprises a circular central reference point and said surrounding ring or track comprises a surrounding annular area in which said markings are in the form of sectors bounded in the circumferential direction by radii struck from the centre of said circular central reference point.

6. A system for use in positioning devices within a working area, comprising a matrix of marker elements provided on a base or floor surface in such area, each said marker element carrying information defining uniquely the position of the marker element on said base or floor surface, the system including at least one device capable of translation or movement over said base or floor surface and having detector means for detecting and reading said marker elements.

7. A system according to Claim 6 wherein said marker elements are visible elements and wherein said detector means comprises optical detector means.

8. A system according to Claim 6 or Claim 7 wherein said detector means and/or said marker elements are such as to allow a said marker element to be located and "read" in any orientation of the respective device about a vertical axis thereof perpendicular to said floor or base surface.

9. A positioning system according to any preceding claim,
wherein the or each said device capable of translation or movement on said base or floor surface comprises a film or video camera mounted on a movable support, and wherein the spatial frequency in each said marker element is so high as to be substantially invisible to said film or video camera at the distance at which the latter is disposed from the regions of said base or floor within its field of view.
